# EUROPEAN PATENT APPLICATION

(11) **EP 4 752 264 A1**
(43) Date of publication of application: **03.06.2026**
(21) Application number: 25808947.3
(22) Date of filing: 14.04.2025
(51) Int. Cl.: C25B 13/08, H01M 8/1041, H01M 4/86, H01M 4/92, H01M 8/1004, C25B 9/19, C25B 1/04

(54) **LOW-HYDROGEN-PERMEABILITY PROTON EXCHANGE MEMBRANE, AND PREPARATION METHOD THEREFOR AND USE THEREOF**

(30) Priority: 08.05.2024 CN 202410561494
(71) Applicant: Shandong Dongyue Future Hydrogen Energy Material Co. Ltd, Zibo, Shandong 256400 (CN)
(72) Inventor: WANG, Li, Zibo, Shandong 256400 (CN); ZOU, Yecheng, Zibo, Shandong 256400 (CN); CHEN, Yang, Zibo, Shandong 256400 (CN); ZHANG, Heng, Zibo, Shandong 256400 (CN); ZHANG, Yongming, Zibo, Shandong 256400 (CN); ZHAO, Shuhui, Zibo, Shandong 256400 (CN); DING, Han, Zibo, Shandong 256400 (CN); SU, Xuan, Zibo, Shandong 256400 (CN); CAO, Lina, Zibo, Shandong 256400 (CN)
(74) Representative: Chung, Hoi Kan
(86) International application number: PCT/CN2025/088899
(87) International publication number: WO 2025/232473

(57) **Abstract**

The present invention relates to the technical field of the electrolysis of water, and specifically relates to a low-hydrogen-permeability proton exchange membrane, and a preparation method therefor and the use thereof. The proton exchange mem-l brane comprises a Pt-containing additive layer and a matrix membrane, wherein the Pt-containing additive layer is composed of a Pt additive and a fluorine-containing proton exchange resin, the Pt-containing additive layer comprises an array layer and a flattening layer, the thickness ratio and the active-component ratio of the array layer to the flattening layer are respectively within the ranges of 1:(0.5-30) and 1:(1-50), and the array layer is composed of arrays arranged in order and an array layer resin coating the arrays. In the low-hydrogen-permeability proton exchange membrane provided by the present invention, by providing the Pt-containing additive layer consisting of the array layer and the flattening layer, the specific surface area of the Pt-containing additive layer is effectively increased by means of the arrays in the array layer, thereby achieving the efficient utilization of an additive; moreover, the hydrogen permeability improvement effect is further improved by controlling the thickness ratio and the active-component ratio of the array layer to the flattening layer and the parameters of the arrays.

## Description

### TECHNICAL FIELD

The present disclosure relates to the technical field of water electrolysis, in particular to a low-hydrogen-permeability proton exchange membrane as well as a preparation method and use thereof.

### BACKGROUND

As a clean and zero-carbon future energy source, hydrogen energy is embracing an unprecedented development opportunity, and is sparking a global energy revolution. At present, all major economies have successively rolled out hydrogen energy development strategies, planning policies and major projects. The hydrogen energy uses a hydrogen gas as an energy carrier. At present, there are many hydrogen gas preparation methods, however, a method for hydrogen production via water electrolysis coupled with renewable energy is the most promising hydrogen production method, which is predicted to account for 70% of all hydrogen production technologies by 2050. The PEM (proton exchange membrane) water electrolysis technology has extremely wide market prospects and commercial values due to its advantages such as high current density, rapid response speed, small electrolytic bath volume, flexible operation, suitability for rapid load change and good matching with wind power and photovoltaic power. However, production costs for hydrogen production via PEM are still 2-3 times more than those for hydrogen production via steam methane reforming. To further reduce the production costs, it is necessary to improve the conversion efficiency of hydrogen. At present, use of a thin film (with a thickness of about 50 µm) is a potential for reducing proton exchange membrane costs and improving the conversion efficiency of hydrogen. However, a thinner film can cause higher gas permeation, so that more hydrogen gases enter from a cathode side into an anode side via a membrane. Under standard conditions, the lower explosive limit of hydrogen in oxygen is 4 vol%. Based on safety reasons, the proportion of hydrogen in oxygen should not exceed 2 vol%.

At present, several methods can be used for inhibiting the content of hydrogen in oxygen. One of the typical methods is a hydrocarbon-based alternative membrane which exhibits better gas barrier performance but relatively low stability and relatively high water expansion rate; and the other method to inhibit the possibility of gas crossover is introduction of a reforming catalyst. Researchers have proven that Pt is a catalyst suitable for recombination of hydrogen and oxygen to generate water. It can be added in different assemblies at the anode side: an external gas reformer, an anode porous transport layer (PTL), an anode catalyst layer or a proton exchange membrane; among them, the incorporation of the external gas reformer requires the pre-drying of the gas and fails to address the safety issues of the entire anode circuit; and the incorporation of the anode porous transport layer or catalyst layer makes Pt exposed to a high potential of > 1.23 V, which causes catalyst dissolution or passivation due to oxide formation and thus is detrimental to long-term stability. Therefore, the direct incorporation of Pt nanoparticles into the membrane is one of the most promising strategies to inhibit the content of hydrogen in oxygen on the premise of reducing the thickness of the membrane and improving the efficiency of the system.

Takenaka, Fedkiw, et al. first reported the incorporation of Pt catalysts into the membrane for use in a polymer electrolyte fuel cell (PEFC). Therefore, the polymer membrane is inserted into a solution containing Pt ions in the first step, and the Pt ions are reduced by using a chemical reducing agent in the second step, thereby generating a Pt layer on the edge of the membrane. Johnson Matthey was the first to incorporate reforming catalysts into PEM membranes; compared with the reference membrane, the hydrogen crossover was reduced by a factor of three at 0.5 A·cm⁻², 60°C and an anode pressure of 1 bar, with other performance being comparable. In addition, in U.S. Patents US4959132A, US5342494A, US5472799A, US5800938A, US5766787A and US20050175886A1, Pt-based proton exchange membranes were prepared via the in-situ reduction (e.g., NaBH₄, hydrogen, hydrazine, etc.) of metal salts (e.g., chloroplatinic acid) or platinum-amine complexes (e.g., [Pt(NH₃)₄]²⁺). In patents CN1464580A, CN1881667A, CN113416982A, CN113594521A and CN101170181A, ultrasonically dispersed Pt particles were filled into one side or two sides of a porous reinforced membrane or a resin layer by blade coating, spin coating, spray coating, immersing, casting and tape casting to prepare a composite proton exchange membrane. However, the membrane structure prepared by adopting the above existing technology only comprises a single-layer flat additive, leading to limited additive utilization rate. Therefore, it is urgent to prepare a novel composite proton exchange membrane containing a Pt-based additive in order to solve the above technical problem.

### SUMMARY

To overcome the above defects in the prior art, the objective of the present disclosure is to provide a low-hydrogen-permeability proton exchange membrane as well as a preparation method and use thereof. The hydrogen permeation inhibition effect is effectively enhanced by arranging array-distributed Pt-based additive layers in the proton exchange membrane.

To achieve the above technical effect, the present disclosure adopts the following technical solution:
Provided is a low-hydrogen-permeability proton exchange membrane, comprising a Pt-based additive layer and a substrate membrane, wherein the Pt-based additive layer is located at one side or two sides of the substrate membrane; and the total thickness of the low-hydrogen-permeability proton exchange membrane is 5 µm-220 µm, preferably 5 µm-150 µm, further preferably 5 µm-120 µm.

The Pt-based additive layer consists of a Pt-based additive and a fluorinated proton exchange resin, and the mass of the active component of the Pt-based additive is 0.01 wt%-40.0 wt% of that of the fluorinated proton exchange resin;
the Pt-based additive layer comprises an array layer and a flat layer, the thickness ratio of the array layer to the flat layer is 1:(0.5-30), and the molar ratio of the active components in the array layer and the flat layer is 1:(1-50); the thickness of the array layer is 0.1 µm-15 µm, the array layer is composed of orderly arranged arrays and an array layer resin wrapping the arrays, the array density is 1.0×10⁷ units/cm²-1.0×10⁹ units/cm², and the height of a single array is 1.0-17.0 times as the width of the single array; the overall array layer is in a shape of cuboid; and
the substrate membrane is a fluorinated proton exchange membrane.

In the low-hydrogen-permeability proton exchange membrane provided by the present disclosure, the Pt-based additive layer composed of the array layer and the flat layer is arranged, and the hydrogen permeation improvement effect is further improved by controlling the thickness and active component ratios of the array layer and the flat layer as well as array parameters.

Preferably, the shape of each array in the array layer includes, but is not limited to, cylindrical, prismatic or conical shapes, further preferably the conical shape; the array density is 1.0×10⁸ units/cm²-8.0×10⁸ units/cm², and the height of the single array is 1.0-5.0 times as the width of the single array; preferably, the array density is 2.0×10⁸ units/cm²-6.0×10⁸ units/cm², and the height of the single array is 1.0-3.0 times as the width of the single array; and the projection direction of each array is toward and/or away from the substrate membrane.

Preferably, when the array layer is away from the substrate membrane, one side of the array layer away from the substrate membrane is further provided with an array protective layer; the array protective layer is made of the fluorinated proton exchange resin, and the thickness of the array protective layer is 1 µm-10 µm; and further preferably, the thickness of the array protective layer is 2 µm-5 µm.

Preferably, the fluorinated proton exchange resin is selected from at least one of a fluorosulfonic acid resin, a fluorocarboxylic acid resin or a fluorophosphoric acid resin with long or short side chains, and the fluorinated proton exchange resin has the number average molecular weight ranging from 150,000 to 600,000 and the exchange capacity of 0.8 mmol/g-1.6 mmol/g; further preferably, the fluorinated proton exchange resin has the number average molecular weight ranging from 200,000 to 400,000 and the exchange capacity of 1.0 mmol/g-1.2 mmol/g.

Preferably, the mass of the active component in the Pt-based additive is 0.2 wt%-5.0 wt% of that of the fluorinated proton exchange resin; further preferably, the mass of the active component in the Pt-based additive is 0.4 wt%-1.0 wt% of that of the fluorinated proton exchange resin.

Preferably, the morphology of the Pt-based additive is spherical, rod-like, wire-like, sheet-like, tubular or core-shell structure. The Pt-based additive as described in the present disclosure is a single metal, alloy, supported single metal or supported alloy containing a catalytically active component; the catalytically active component of the Pt-based additive is selected from Pt, Au, Pd, Ru, Rh, Ir, Co, Ni, Fe, Mo, W, Cu or Ag, preferably Pt, Co and Pt/Co alloy. The carrier of the supported single metal and supported alloy is a composite of one or more of carbon, silicon dioxide, aluminum oxide, titanium dioxide and molecular sieves, preferably a carbon carrier, a silicon dioxide carrier and a titanium dioxide carrier.

Preferably, the total thickness of the Pt-based additive layer ranges from 2 µm to 30 µm, preferably 2 µm to 20 µm, further preferably 2 µm to 10 µm; the thickness ratio of the array layer to the flat layer is 1:(0.5-30), preferably 1:(1-15), further preferably 1:(1-3); and the molar ratio of the active components in the array layer and the flat layer is 1:(1-50), preferably 1:(1-15), further preferably 1:(1-3).

Specifically, the fluorinated proton exchange membrane is a fluorinated proton exchange resin reinforced membrane or a fluorinated proton exchange resin non-reinforced membrane. Further, the fluorinated proton exchange resin non-reinforced membrane is a homogeneous membrane made of fluorinated proton exchange resins.

Preferably, the fluorinated proton exchange resin reinforced membrane comprises resin layers and reinforcing layers, the number of the reinforcing layers is 1-10, preferably, 1-5, further preferably 1-3, the number of the resin layers is one greater than that of the reinforcing layers, and the reinforcing layers are located between two adjacent resin layers; the total thickness of the fluorinated proton exchange resin reinforced membrane is 3 µm-218 µm, preferably 3 µm-148 µm, further preferably 3 µm-118 µm; and the thickness of the resin layer is 1 µm-30 µm, preferably 1 µm-20 µm; and the thickness of the reinforcing layer is 1 µm-30 µm, preferably 1 µm-10 µm.

Preferably, the thickness of the fluorinated proton exchange resin non-reinforced membrane is 3 µm-218 µm, preferably 3 µm-148 µm, further preferably 3 µm-118 µm.

The present disclosure further provides a preparation method of a low-hydrogen-permeability proton exchange membrane as described above, comprising the following steps:
S1, ultrasonically dispersing a Pt-based additive in a solvent to obtain dispersion A, dispersing a fluorinated proton exchange resin in the solvent to obtain dispersion B, and evenly mixing the dispersion A with the dispersion B to obtain dispersion C;
S2, filling the dispersion C into array pore channels of a silicon-based template subjected to surface modification, then performing negative pressure treatment, subsequently continuing to add dropwise the dispersion C to reach the preset thickness of a flat layer, followed by drying and curing, peeling off the silicon-based template to obtain an integrally formed flat layer and orderly arranged arrays, and then wrapping the dispersion B at the periphery of the arrays, thus obtaining a Pt-based additive layer; and
S3, preparing a substrate membrane on the Pt-based additive layer prepared in step S2 to obtain the low-hydrogen-permeability proton exchange membrane.

Preferably, in step S1, the solvent is selected from at least one of water, ethanol, n-propanol, isopropanol, N,N-dimethylformamide (DMF), N,N-dimethylacetamide (DMAC) or N-methylpyrrolidone (NMP); the power of ultrasonic dispersion is 180 W-630 W, the duration of ultrasonic dispersion is 0.5 h-6 h, the rotation speed of stirring is 200 rpm-800 rpm, and the duration of stirring is 24 h-72 h; further preferably, the power of ultrasonic dispersion is 180 W-450 W, the duration of ultrasonic dispersion is 1 h-4 h, the rotation speed of stirring is 200 rpm-600 rpm, and the duration of stirring is 48 h-72 h.

Preferably, in step S1, a mass ratio of the dispersion A to the dispersion B in the dispersion C is in a range of (0.2-1):1; further preferably, a mass ratio of the dispersion A to the dispersion B is in a range of (0.5-0.7):1.

Preferably, in step S2, the silicon-based template is subjected to gas-phase surface modification via vacuum programmed temperature rise. Specifically, a surface modification agent is selected from octadecyltrichlorosilane, octyltrimethoxysilane, (3-aminopropyl)trimethoxysilane, (3-mercaptopropyl)trimethoxysilane or octadecyltrimethoxysilane and octyltrimethoxysilane, preferably octyltrimethoxysilane; the surface modification temperature is programmed to rise in stages of (50-70°C)-(80-100°C)-(120-200°C), and the three stages of temperatures last 8 h, 3 h and 1 h respectively, preferably (60-70°C)-(80-90°C)-(120-180°C), further preferably (65-70°C)-(85-90°C)-(150-160°C); and the vacuum degree for surface modification is -0.20 MPa to -0.10 MPa, preferably -0.15 MPa to -0.10 MPa, further preferably -0.12 MPa to -0.10 MPa.

Preferably, in step S2, the vacuum degree during the negative pressure treatment is -0.20 MPa to -0.10 MPa, preferably, -0.15 MPa to -0.10 MPa.

Preferably, in step S3, a method for preparing the substrate membrane comprises spray coating, spin coating, blade coating, immersing, casting and silk-screen printing, etc. The process for preparing the substrate membrane is as follows: the fluorinated proton exchange resin non-reinforced membrane is prepared by using the dispersion B, or, the process for preparing the substrate membrane is as follows: the fluorinated proton exchange resin reinforced membrane is prepared by using the dispersion B and a reinforcing material; preferably, the reinforcing material is selected from one or more of polytetrafluoroethylene (PTFE), polyvinylidene fluoride (PVDF), polyethylene (PVF), polypropylene (PP), polyvinyl chloride (PVC), ethylene-tetrafluoroethylene (ETFE) copolymers, polyphenylene sulfide (PPS) non-woven fabric, polyether ether ketone (PEEK), polyimide (PI), fluorinated polyimide (FPI), polysulfone (PSF), perfluoroethylene-propylene (FEP) fibers or perfluoroalkoxy vinyl ether (PFA) copolymer fibers, preferably PTFE, PPS non-woven fabric, PEEK and PSF.

Preferably, the step S3 further comprises: after the preparation of the substrate membrane is completed, preparing an array protective layer at one side of the array layer away from the substrate membrane by using the dispersion B if the array layer is away from the substrate membrane, coating the dispersion B onto one side of the array layer away from the substrate membrane, followed by drying and shaping.

The present disclosure further provides use of the low-hydrogen-permeability proton exchange membrane as described above or the low-hydrogen-permeability proton exchange membrane prepared by using the preparation method as described above in water electrolysis or fuel cell membrane electrodes.

Preferably, in the low-hydrogen-permeability proton exchange membrane, the additive layer in the proton exchange membrane with the Pt-based additive layer at one side is located in an anode for water electrolysis or a cathode of a fuel cell.

Compared with the prior art, the present disclosure has the benefits:
1. The low-hydrogen-permeability proton exchange membrane provided by the present disclosure has the Pt-based additive layer composed of the array layer and the flat layer. By utilizing the arrays in the array layer, the specific surface area of the Pt-based additive layer effectively increases, thereby achieving the efficient utilization of the additive. Furthermore, the hydrogen permeation improvement effect is further improved by controlling the thicknesses and active component ratio of the array layer and the flat layer as well as the array parameters. The membrane electrode prepared from the low-hydrogen-permeability proton exchange membrane is used for hydrogen production reaction via water electrolysis, the hydrogen content in oxygen is significantly reduced, which can reach or drop below the level of 0.1 vol%, with a minimum of 0.017 vol%. This effectively addresses safety concerns and provides new materials and methods for the development of hydrogen production technology via PEM water electrolysis.
2. The membrane electrode prepared from the low-hydrogen-permeability proton exchange membrane is used for fuel cell power generation, and has a significantly higher initial voltage of up to 0.98 V and higher performance under a low humidity condition, thereby providing a new material and method for development of a fuel cell technology.
3. In the preparation method of the present disclosure, the prepared Pt-based additive layer quickly peels off from the silicon-based template through surface modification of the silicon-based template, which not only is conducive to the shape maintenance of the array but also can be repeatedly used, thereby effectively controlling the economic costs.

### BRIEF DESCRIPTION OF DRAWINGS

FIG. 1 is a structural diagram of low-hydrogen-permeability proton exchange membranes provided in Examples 1-6, 9 and 13 according to the present disclosure;
FIG. 2 is a structural diagram of low-hydrogen-permeability proton exchange membranes provided in Examples 7 and 11 according to the present disclosure;
FIG. 3 is a structural diagram of a low-hydrogen-permeability proton exchange membrane provided in Example 8 according to the present disclosure;
FIG. 4 is a structural diagram of low-hydrogen-permeability proton exchange membranes provided in Comparative examples 6 and 13 according to the present disclosure;
FIG. 5 is a structural diagram of a low-hydrogen-permeability proton exchange membrane provided in Comparative example 7 according to the present disclosure;
FIG. 6 is a structural diagram of low-hydrogen-permeability proton exchange membranes provided in Examples 10 and 12 according to the present disclosure;
FIG. 7 is a structural diagram of a membrane electrode provided in Example 14 according to the present disclosure;
FIG. 8 is a structural diagram of a membrane electrode provided in Example 15 according to the present disclosure;
FIG. 9 shows cell polarization curves of proton exchange membranes in typical examples and comparative examples in the application of hydrogen production via water electrolysis; and
FIG. 10 shows cell polarization curves of proton exchange membranes in typical examples and comparative examples in the application of fuel cell power generation.

In the figures, 1, flat layer; 2, array layer; 3, resin layer; 4, reinforcing layer; 5, array protective layer; 6, non-reinforced membrane; 11, anode plate; 12, anode diffusion layer; 13, anode catalyst; 14, proton exchange membrane; 15, cathode catalyst; 16, cathode diffusion layer; and 17, cathode plate.

### DETAILED DESCRIPTION OF THE EMBODIMENTS

Next, the present disclosure will be further described with reference to drawings and embodiments.

Reagents used in examples and comparative examples are all commercially available reagents, and their sources are not described in detail.

### Example 1

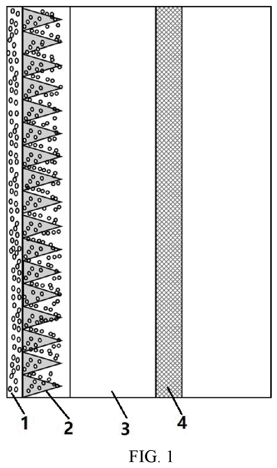

A low-hydrogen-permeability proton exchange membrane, as shown in FIG. 1, was prepared by the following steps:
S1, Pt nanorod particles were subjected to even ultrasonic dispersion (450 W, 2 h) in a mixed solvent of water and n-propanol (in a volume ratio of 1:1) to form dispersion A; a long-side chain perfluorosulfonic acid resin (PFSA) with an exchange capacity of 1.2 mmol/g and the number average molecular weight of 240,000 was added to the mixed solvent of water and n-propanol (in a volume ratio of 1:1) to be dissolved under the stirring (300 rpm, 72 h) to form a 30wt% resin dispersion B; the dispersion A and the dispersion B in a mass ratio of 3:5 were evenly stirred and mixed to obtain dispersion C, wherein the mass of the Pt nanoparticles was 0.4 wt% of that of PFSA;
S2, a silicon-based template was subjected to gas phase modification using n-octyltrimethoxysilane via vacuum programmed temperature rise, the n-octyltrimethoxysilane and the silicon-based template were respectively placed in two watch glasses and then placed in a vacuum drying oven for programmed temperature rise at the temperatures of 65°C-85°C-150°C for 8 h, 3 h and 1 h respectively in a vacuum degree of -0.10 MPa, and then the template was taken out and ultrasonically washed once with trichloromethane, n-hexane and isopropanol in sequence for 10 min each; then the template was immersed in the dispersion C to be treated for 2 h at a vacuum negative pressure (-0.1 MPa) so that the dispersion C was evenly filled in the pore channels of the template to form orderly arranged arrays; then a certain amount of dispersion C was slowly dropwise added until a certain thickness was reached, and then a flat layer 1 was formed by drying and curing; and finally, after the membrane was directly peeled off from the template, the dispersion B was wrapped at the periphery of the arrays to form a Pt-based additive layer with a conical array structure, wherein the array density was 2.3×10⁸ units/cm², and the height of the single array was 1.1 times as the width of the single array; in addition, the total thickness of the Pt-based additive layer was 5 µm, wherein the thickness of the flat layer 1 was 3 µm, and the thickness of the array layer 2 was 2 µm; the thickness ratio of the flat layer 1 to the array layer 2 was 3:2; and the molar ratio of the active components of the Pt-based additives in the flat layer 1 and the array layer 2 was 1:1; and
S3, the resin dispersion B continued to be sprayed onto the Pt-based additive layer, and a single-reinforced fluorinated proton exchange membrane was prepared by using PTFE as a reinforcing layer 4. As shown in FIG. 1, from top to bottom, the exchange membrane comprises a resin layer 3 (20 µm), a reinforcing layer 4 (10 µm), the resin layer 3 (20 µm), an array layer 2 (2 µm) and a flat layer 1 (3 µm) in sequence, wherein two resin layers 3 are arranged, the reinforcing layer 4 is located between the two resin layers 3, and the total thickness of the membrane is 55 µm.

### Example 2

A low-hydrogen-permeability proton exchange membrane, as shown in FIG. 1, was prepared by the following steps:
S1, Pt nanorod particles were subjected to even ultrasonic dispersion (240 W, 3 h) in a mixed solvent of ethanol and n-propanol (in a volume ratio of 3:1) to form dispersion A; a long-side chain perfluorocarboxylic acid resin with an exchange capacity of 1.2 mmol/g and the number average molecular weight of 400,000 was added to the mixed solvent of ethanol and n-propanol (in a volume ratio of 3:1) to be dissolved under the stirring (600 rpm, 48 h) to form a 30wt% resin dispersion B; the dispersion A and the dispersion B in a mass ratio of 3:5 were evenly stirred and mixed to obtain dispersion C, wherein the mass of the Pt nanoparticles was 0.4 wt% of that of the perfluorocarboxylic acid resin;
S2, a template was subjected to gas phase modification using n-octadecyltrimethoxysilane via vacuum programmed temperature rise, the n-octadecyltrimethoxysilane and the silicon-based template were respectively placed in two watch glasses and then placed in a vacuum drying oven for programmed temperature rise at the temperatures of 67°C-88°C-155°C for 8 h, 3 h and 1 h respectively in a vacuum degree of -0.10 MPa, and then the template was taken out and ultrasonically washed once with trichloromethane, n-hexane and isopropanol in sequence for 10 min each; then the template was immersed in the dispersion C to be treated for 2 h at a vacuum negative pressure (-0.15 MPa) so that the dispersion C was evenly filled in the pore channels of the template to form orderly arranged arrays; then a certain amount of dispersion C was slowly dropwise added until a certain thickness was reached, and then a flat layer 1 was formed by drying and curing; and finally, after the membrane was directly peeled off from the template, the dispersion B was wrapped at the periphery of the arrays to form a Pt-based additive layer with a conical array structure, wherein the array density was 2.3×10⁸ units/cm², and the height of the single array was 1.1 times as the width of the single array; in addition, the total thickness of the Pt-based additive layer was 10 µm, wherein the thickness of the flat layer 1 was 7 µm, and the thickness of the array layer 2 was 3 µm; the thickness ratio of the flat layer 1 to the array layer 2 was 7:3; and the masses of the active components of the Pt-based additives in the flat layer 1 and the array layer 2 were 0.4wt% of the mass of the resin powder; and the molar ratio of the active components of the Pt-based additives in the flat layer 1 and the array layer 2 was 1:1; and
S3, the resin dispersion B continued to be sprayed onto the Pt-based additive layer, and a single-reinforced fluorinated proton exchange membrane was prepared by using PPS as a reinforcing layer 4. As shown in FIG. 1, from top to bottom, the exchange membrane comprises a resin layer 3 (20 µm), a reinforcing layer 4 (5 µm), the resin layer 3 (20 µm), an array layer 2 (3 µm) and a flat layer 1 (7 µm) in sequence, wherein two resin layers 3 are arranged, the reinforcing layer 4 is located between the two resin layers 3, and the total thickness of the membrane is 55 µm.

### Example 3

A low-hydrogen-permeability proton exchange membrane, as shown in FIG. 1, was prepared by the following steps:
S1, Pt nanosphere particles were subjected to even ultrasonic dispersion (450 W, 2 h) in a DMF solvent to form dispersion A; a long-side chain perfluorosulfonic acid resin (PFSA) with an exchange capacity of 1.2 mmol/g and the number average molecular weight of 240,000 was added to the DMF solvent to be dissolved under the stirring (200 rpm, 72 h) to form a 30 wt% resin dispersion B; the dispersion A and the dispersion B in a mass ratio of 3:5 were evenly stirred and mixed to obtain dispersion C, wherein the mass ratio of Pt to the resin powder was 0.4 wt%;
S2, a template was subjected to gas phase modification using (3-aminopropyl)trimethoxysilane via vacuum programmed temperature rise, the (3-aminopropyl)trimethoxysilane and the silicon-based template were respectively placed in two watch glasses and then placed in a vacuum drying oven for programmed temperature rise at the temperatures of 70°C-90°C-160°C for 8 h, 3 h and 1 h respectively in a vacuum degree of -0.13 MPa, and then the template was taken out and ultrasonically washed once with trichloromethane, n-hexane and isopropanol in sequence for 10 min each; then the template was immersed in the dispersion C to be treated for 2 h at a vacuum negative pressure (-0.1 MPa) so that the dispersion C was evenly filled in the pore channels of the template to form orderly arranged arrays; then a certain amount of dispersion C was slowly dropwise added until a certain thickness was reached, and then a flat layer 1 was formed by drying and curing; and finally, after the membrane was directly peeled off from the template, the dispersion B was wrapped at the periphery of the arrays to form a Pt-based additive layer with a conical array structure, wherein the array density was 5.7×10⁸ units/cm², the height of the single array was 5.0 times as the width of the single array; in addition, the total thickness of the Pt-based additive layer was 5 µm, wherein the thickness of the flat layer 1 was 3 µm, and the thickness of the array layer 2 was 2 µm; the thickness ratio of the flat layer 1 to the array layer 2 was 3:2; and the molar ratio of the active components of the Pt-based additives in the flat layer 1 and the array layer 2 was 1:1; and
S3, the resin dispersion B continued to be sprayed onto the Pt-based additive layer, and a single-reinforced fluorinated proton exchange membrane was prepared by using PEEK as a reinforcing layer 4. As shown in FIG. 1, from top to bottom, the exchange membrane comprises a resin layer 3 (20 µm), a reinforcing layer 4 (10 µm), the resin layer 3 (20 µm), an array layer 2 (2 µm) and a flat layer 1 (3 µm) in sequence, wherein two resin layers 3 are arranged, the reinforcing layer 4 is located between the two resin layers 3, and the total thickness of the membrane is 55 µm.

### Example 4

A low-hydrogen-permeability proton exchange membrane, as shown in FIG. 1, was prepared by the following steps:
S1, Pt nanosphere particles were subjected to even ultrasonic dispersion (450 W, 2 h) in a mixed solvent of water and n-propanol (in a volume ratio of 1:1) to form dispersion A; a long-side chain perfluorosulfonic acid resin (PFSA) with an exchange capacity of 1.0 mmol/g and the number average molecular weight of 260,000 was added to the mixed solvent of water and n-propanol (in a volume ratio of 1:1) to be dissolved under the stirring (400 rpm, 60 h) to form a 30wt% resin dispersion B; and the dispersion A and the dispersion B in a mass ratio of 3:5 were evenly stirred and mixed to obtain dispersion C, wherein the mass ratio of Pt to the resin powder was 0.8 wt%;
S2, a template was subjected to gas phase modification using n-octyltrimethoxysilane via vacuum programmed temperature rise, the n-octyltrimethoxysilane and the silicon-based template were respectively placed in two watch glasses and then placed in a vacuum drying oven for programmed temperature rise at the temperatures of 65°C-85°C-150°C for 8 h, 3 h and 1 h respectively in a vacuum degree of -0.10 MPa, and then the template was taken out and ultrasonically washed once with trichloromethane, n-hexane and isopropanol in sequence for 10 min each; then the template was immersed in the dispersion C to be treated for 2 h at a vacuum negative pressure (-0.1 MPa) so that the dispersion C was evenly filled in the pore channels of the template to form orderly arranged arrays; then a certain amount of dispersion C was slowly dropwise added until a certain thickness was reached, and then a flat layer 1 was formed by drying and curing; and finally, after the membrane was directly peeled off from the template, the dispersion B was wrapped at the periphery of the arrays to form a Pt-based additive layer with a conical array structure, wherein the array density was 5.7×10⁸ units/cm², and the height of the single array was 5.0 times as the width of the single array; in addition, the total thickness of the Pt-based additive layer was 10 µm, wherein the thickness of the flat layer 1 was 7 µm, and the thickness of the array layer 2 was 3 µm; the thickness ratio of the flat layer 1 to the array layer 2 was 7:3; and the masses of the active components of the Pt-based additives in the flat layer 1 and the array layer 2 were 0.8 wt% of the mass of the resin powder, and the molar ratio of the active components of the Pt-based additives in the flat layer 1 and the array layer 2 was 1:1; and
S3, the resin dispersion B continued to be sprayed onto the Pt-based additive layer, and a single-reinforced fluorinated proton exchange membrane was prepared by using PSF as a reinforcing layer 4. As shown in FIG. 1, from top to bottom, the exchange membrane comprises a resin layer 3 (20 µm), a reinforcing layer 4 (5 µm), the resin layer 3 (20 µm), an array layer 2 (3 µm) and a flat layer 1 (7 µm) in sequence, wherein two resin layers 3 are arranged, the reinforcing layer 4 is located between the two resin layers 3, and the total thickness of the membrane is 55 µm.

### Example 5

A low-hydrogen-permeability proton exchange membrane, as shown in FIG. 1, was prepared by the following steps:
S1, Pt nanosphere particles were subjected to even ultrasonic dispersion (450 W, 2 h) in a mixed solvent of water and n-propanol (in a volume ratio of 1:1) to form dispersion A; a long-side chain perfluorosulfonic acid resin (PFSA) with an exchange capacity of 1.0 mmol/g and the number average molecular weight of 260,000 was added to the mixed solvent of water and n-propanol (in a volume ratio of 1:1) to be dissolved under the stirring (400 rpm, 48 h) to form a 30 wt% resin dispersion B; the dispersion A and the dispersion B in a mass ratio of 3:5 were evenly stirred and mixed to obtain dispersion C, wherein the mass ratio of Pt to resin powder was 0.4 wt%; the Pt nanoparticles were subjected to even ultrasonic dispersion (450 W, 2 h) in the mixed solution of water and n-propanol (in a volume ratio of 1:1) to form dispersion D; the dispersion D and the dispersion B in a mass ratio of 3:5 were stirred and evenly mixed to obtain dispersion E, wherein the mass ratio of Pt to resin powder was 0.12 wt%;
S2, a template was subjected to gas phase modification using n-octyltrimethoxysilane via vacuum programmed temperature rise, the n-octyltrimethoxysilane and the silicon-based template were respectively placed in two watch glasses and then placed in a vacuum drying oven for programmed temperature rise at the temperatures of 65°C-85°C-150°C for 8 h, 3 h and 1 h respectively in a vacuum degree of -0.10 MPa, and then the template was taken out and ultrasonically washed once with trichloromethane, n-hexane and isopropanol in sequence for 10 min each; then the template was immersed in the dispersion C to be treated for 2 h at a vacuum negative pressure (-0.1 MPa) so that the dispersion C was evenly filled in the pore channels of the template to form orderly arranged arrays; then a certain amount of dispersion E was slowly dropwise added until a certain thickness was reached, and then a flat layer 1 was formed by drying and curing; and finally, after the membrane was directly peeled off from the template, the dispersion B was wrapped at the periphery of the arrays to form a Pt-based additive layer with a conical array structure, wherein the array density was 5.7×10⁸ units/cm², and the height of the single array was 2.6 times as the width of the single array; in addition, the total thickness of the Pt-based additive layer was 10 µm, wherein the thickness of the flat layer 1 was 5 µm, and the thickness of the array layer 2 was 5 µm; the thickness ratio of the flat layer 1 to the array layer 2 was 1:1; and the masses of the active components of the Pt-based additives in the flat layer 1 and the array layer 2 were 0.8 wt% of the mass of the resin powder, and the molar ratio of the active components of the Pt-based additives in the flat layer 1 and the array layer 2 was 3:1; and
S3, the resin dispersion B continued to be sprayed onto the Pt-based additive layer, and a single-reinforced fluorinated proton exchange membrane was prepared by using PTFE as a reinforcing layer 4. As shown in FIG. 1, from top to bottom, the exchange membrane comprises a resin layer 3 (20 µm), a reinforcing layer 4 (5 µm), the resin layer 3 (20 µm), an array layer 2 (5 µm) and a flat layer 1 (5 µm) in sequence, wherein two resin layers 3 are arranged, the reinforcing layer 4 is located between the two resin layers 3, and the total thickness of the membrane is 55 µm.

### Example 6

A low-hydrogen-permeability proton exchange membrane, as shown in FIG. 1, was prepared by the following steps:
S1, Pt nanosphere particles were subjected to even ultrasonic dispersion (450 W, 2 h) in a mixed solvent of water and n-propanol (in a volume ratio of 1:1) to form dispersion A; a long-side chain perfluorosulfonic acid resin (PFSA) with an exchange capacity of 1.0 mmol/g and the number average molecular weight of 260,000 was added to the mixed solvent of water and n-propanol (in a volume ratio of 1:1) to be dissolved under the stirring (400 rpm, 48 h) to form a 30wt% resin dispersion B; the dispersion A and the dispersion B in a mass ratio of 3:5 were evenly stirred and mixed to obtain dispersion C, wherein the mass ratio of Pt to resin powder was 0.8 wt%;
S2, a template was subjected to gas phase modification using n-octyltrimethoxysilane via vacuum programmed temperature rise, the n-octyltrimethoxysilane and the silicon-based template were respectively placed in two watch glasses and then placed in a vacuum drying oven for programmed temperature rise at the temperatures of 65°C-85°C-150°C for 8 h, 3 h and 1 h respectively in a vacuum degree of -0.10 MPa, and then the template was taken out and ultrasonically washed once with trichloromethane, n-hexane and isopropanol in sequence for 10 min each; then the template was immersed in the dispersion C to be treated for 2 h at a vacuum negative pressure (-0.1 MPa) so that the dispersion C was evenly filled in the pore channels of the template to form orderly arranged arrays; then a certain amount of dispersion C was slowly dropwise added until a certain thickness was reached, and then a flat layer 1 was formed by drying and curing; and finally, after the membrane was directly peeled off from the template, the dispersion B was wrapped at the periphery of the arrays to form a Pt-based additive layer with a conical array structure, wherein the array density was 5.7×10⁸ units/cm², and the height of the single array was 2.6 times as the width of the single array; in addition, the total thickness of the Pt-based additive layer was 10 µm, wherein the thickness of the flat layer 1 was 5 µm, and the thickness of the array layer 2 was 5 µm; the thickness ratio of the flat layer 1 to the array layer 2 was 1:1; and the masses of the active components of the Pt-based additives in the flat layer 1 and the array layer 2 were 0.8 wt% of the mass of the resin powder, and the molar ratio of the active components of the Pt-based additives in the flat layer 1 and the array layer 2 was 1:1; and
S3, the resin dispersion B continued to be sprayed onto the Pt-based additive layer, and a single-reinforced fluorinated proton exchange membrane was prepared by using PTFE as a reinforcing layer 4. As shown in FIG. 1, from top to bottom, the exchange membrane comprises a resin layer 3 (20 µm), a reinforcing layer 4 (5 µm), the resin layer 3 (20 µm), an array layer 2 (5 µm) and a flat layer 1 (5 µm) in sequence, wherein two resin layers 3 are arranged, the reinforcing layer 4 is located between the two resin layers 3, and the total thickness of the membrane is 55 µm.

### Example 7

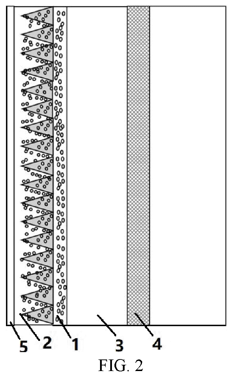

A low-hydrogen-permeability proton exchange membrane, as shown in FIG. 2, was prepared by the following steps:
S1, Pt/C nanoparticles were subjected to even ultrasonic dispersion (180 W, 2 h) in a mixed solvent of water and n-propanol (in a volume ratio of 1:1) to form dispersion A; a long-side chain perfluorosulfonic acid resin with an exchange capacity of 1.1 mmol/g and the number average molecular weight of 250,000 was added to the mixed solvent of water and n-propanol (in a volume ratio of 1:1) to be dissolved under the stirring (300 rpm, 24 h) to form a 30 wt% resin dispersion B; the dispersion A and the dispersion B in a mass ratio of 3:5 were evenly stirred and mixed to obtain dispersion C, wherein the mass ratio of Pt to resin powder was 0.6 wt%;
S2, a template was subjected to gas phase modification using n-octyltrimethoxysilane via vacuum programmed temperature rise, the n-octyltrimethoxysilane and the silicon-based template were respectively placed in two watch glasses and then placed in a vacuum drying oven for programmed temperature rise at the temperatures of 65°C-85°C-150°C for 8 h, 3 h and 1 h respectively in a vacuum degree of -0.10 MPa, and then the template was taken out and ultrasonically washed once with trichloromethane, n-hexane and isopropanol in sequence for 10 min each; then the template was immersed in the dispersion C to be treated for 2 h at a vacuum negative pressure (-0.1 MPa) so that the dispersion C was evenly filled in the pore channels of the template to form orderly arranged arrays; then a certain amount of dispersion C was slowly dropwise added until a certain thickness was reached, and then a flat layer 1 was formed by drying and curing; and finally, after the membrane was directly peeled off from the template, the dispersion B was wrapped at the periphery of the arrays to form a Pt-based additive layer with a conical array structure, wherein the array density was 5.7×10⁸ units/cm², and the height of the single array was 4.2 times as the width of the single array; in addition, the total thickness of the Pt-based additive layer was 10 µm, wherein the thickness of the flat layer 1 was 7 µm, and the thickness of the array layer 2 was 3 µm; the thickness ratio of the flat layer 1 to the array layer 2 was 7:3; and the masses of the active components of the Pt-based additives in the flat layer 1 and the array layer 2 were 0.6 wt% of the mass of the resin powder, and the molar ratio of the active components of the Pt-based additives in the flat layer 1 and the array layer 2 was 1:1;
S3, the resin dispersion B continued to be sprayed onto the Pt-based additive layer for membrane formation on the array, so as to form an array protective layer 5 with the thickness of 3 µm;
S4, a single-reinforced fluorinated proton exchange membrane was prepared by using PTFE as a reinforcing layer 4 and performing blade coating on the resin dispersion B; wherein, the thickness of the resin layer 3 was 18.5 µm, the thickness of the reinforcing layer 4 was 5 µm, and the thickness of the membrane was 42 µm; and
S5, a proton exchange membrane with an array structure on a top layer was prepared by using the membrane with the array structure and array protective layer 5 prepared in step (3) and the single-reinforced proton exchange membrane prepared in step (4) via hot pressing (160°C, 2.5 MPa, 5 min), wherein the total thickness of the membrane was 55 µm. As shown in FIG. 2, from top to bottom, the exchange membrane comprises an array protective layer 5 (3 µm), an array layer 2 (3 µm), a flat layer 1 (7 µm), a resin layer 3 (18.5 µm), a reinforcing layer 4 (5 µm) and the resin layer 3 (18.5 µm) in sequence, wherein two resin layers 3 are arranged, the reinforcing layer 4 is located between the two resin layers 3, and the total thickness of the membrane is 55 µm.

### Example 8

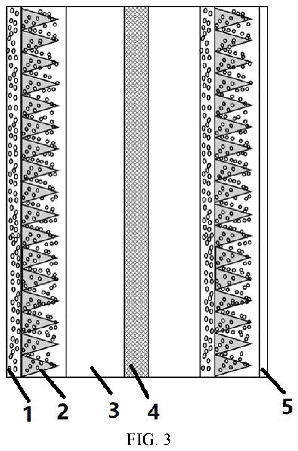

A low-hydrogen-permeability proton exchange membrane, as shown in FIG. 3, was prepared by the following steps:
S1, Pt nanosphere particles were subjected to even ultrasonic dispersion (450 W, 2 h) in a DMAC solvent to form dispersion A; a long-side chain perfluorosulfonic acid resin (PFSA) with an exchange capacity of 1.2 mmol/g and the number average molecular weight of 240,000 was added to the DMAC solvent to be dissolved under the stirring (300 rpm, 24 h) to form a 30 wt% resin dispersion B; proper amounts of dispersion A and the resin dispersion B were evenly stirred and mixed to obtain dispersion C, wherein the mass ratio of Pt to PFSA was 0.4 wt%;
S2, a template was subjected to gas phase modification using n-octyltrimethoxysilane via vacuum programmed temperature rise, the n-octyltrimethoxysilane and the silicon-based template were respectively placed in two watch glasses and then placed in a vacuum drying oven for programmed temperature rise at the temperatures of 65°C-85°C-150°C for 8 h, 3 h and 1 h respectively in a vacuum degree of -0.10 MPa, and then the template was taken out and ultrasonically washed once with trichloromethane, n-hexane and isopropanol in sequence for 10 min each; then the template was immersed in the dispersion C to be treated for 2 h at a vacuum negative pressure (-0.1 MPa) so that the dispersion C was evenly filled in the pore channels of the template to form orderly arranged arrays; then a certain amount of dispersion C was slowly dropwise added until a certain thickness was reached, and then a flat layer 1 was formed by drying and curing; and finally, after the membrane was directly peeled off from the template, the dispersion B was wrapped at the periphery of the arrays to form a Pt-based additive layer with a conical array structure, wherein the array density was 5.7×10⁸ units/cm², and the height of the single array was 4.2 times as the width of the single array; in addition, the total thickness of the Pt-based additive layer was 5 µm, wherein the thickness of the flat layer 1 was 3 µm, and the thickness of the array layer 2 was 2 µm; the thickness ratio of the flat layer 1 to the array layer 2 was 3:2; and the masses of the active components of the Pt-based additives in the flat layer 1 and the array layer 2 were 0.4 wt% of the mass of the resin powder, and the molar ratio of the active components of the Pt-based additives in the flat layer 1 and the array layer 2 was 1:1;
S3, the resin dispersion B continued to be sprayed onto the Pt-based additive layer, and a single-reinforced fluorinated proton exchange membrane was prepared by using PEEK as a reinforcing layer 4. The thickness of the resin layer 3 was 19 µm, the thickness of the reinforcing layer 4 was 5 µm, and the total thickness of the membrane was 48 µm;
S4, preparing a Pt-based additive layer by repeating steps (1)-(2), and subsequently continuing to spray the Pt-based additive layer on the Pt-based additive layer for membrane formation on the array so as to form an array protective layer 5 with the thickness of 2 µm; and
S5, a proton exchange membrane with array structures at two sides was prepared from the membrane with the array structure and the array protective layer 5 prepared in step (4) and the single-reinforced proton exchange membrane with the array structure prepared in step (3) via hot pressing (160°C, 2.5 MPa, 5 min), wherein the total thickness of the membrane was 55 µm. As shown in FIG. 3, from top to bottom, the exchange membrane comprises an array protective layer 5 (2 µm), an array layer 2 (2 µm), a flat layer 1 (3 µm), a resin layer 3 (19 µm), a reinforcing layer 4 (5 µm), the resin layer 3 (19 µm), the array layer 2 (2 µm) and the flat layer 1 (3 µm) in sequence, wherein two resin layers 3 are arranged, the reinforcing layer 4 is located between the two resin layers 3, and the total thickness of the membrane is 55 µm.

### Example 9

A low-hydrogen-permeability proton exchange membrane, as shown in FIG. 1, was prepared by the following steps:
S1, Co@Pt nanoalloy particles with Pt as a shell layer were subjected to even ultrasonic dispersion (450 W, 2 h) in a mixed solvent of water and n-propanol (in a volume of ratio of 1:1) to form dispersion A; a long-side chain perfluorosulfonic acid resin (PFSA) with an exchange capacity of 1.0 mmol/g and the number average molecular weight of 260,000 was added to the mixed solvent of water and n-propanol (in a volume ratio of 1:1) to be dissolved under the stirring (400 rpm, 48 h) to form a 30 wt% resin dispersion B; the dispersion A and the dispersion B in a mass ratio of 3:5 were stirred and evenly mixed to obtain dispersion C, wherein the mass ratio of Pt to resin powder was 0.8 wt%;
S2, a template was subjected to gas phase modification using n-octyltrimethoxysilane via vacuum programmed temperature rise, the n-octyltrimethoxysilane and the silicon-based template were respectively placed in two watch glasses and then placed in a vacuum drying oven for programmed temperature rise at the temperatures of 65°C-85°C-150°C for 8 h, 3 h and 1 h respectively in a vacuum degree of -0.10 MPa, and then the template was taken out and ultrasonically washed once with trichloromethane, n-hexane and isopropanol in sequence for 10 min each; then the template was immersed in the dispersion C to be treated for 2 h at a vacuum negative pressure (-0.1 MPa) so that the dispersion C was evenly filled in the pore channels of the template to form orderly arranged arrays; then a certain amount of dispersion C was slowly dropwise added until a certain thickness was reached, and then a flat layer 1 was formed by drying and curing; and finally, after the membrane was directly peeled off from the template, the dispersion B was wrapped at the periphery of the arrays to form a Pt-based additive layer with a conical array structure, wherein the array density was 5.7×10⁸ units/cm², and the height of the single array was 2.6 times as the width of the single array; in addition, the total thickness of the Pt-based additive layer was 10 µm, wherein the thickness of the flat layer 1 was 5 µm, and the thickness of the array layer 2 was 5 µm; the thickness ratio of the flat layer 1 to the array layer 2 was 1:1; and the masses of the active components of the Pt-based additives in the flat layer 1 and the array layer 2 were 0.8 wt% of the mass of the resin powder, and the molar ratio of the active components of the Pt-based additives in the flat layer 1 and the array layer 2 was 1:1; and
S3, the resin dispersion B continued to be sprayed onto the Pt-based additive layer, and a single-reinforced fluorinated proton exchange membrane was prepared by using PTFE as a reinforcing layer 4. As shown in FIG. 1, from top to bottom, the exchange membrane comprises a resin layer 3 (20 µm), a reinforcing layer 4 (5 µm), the resin layer 3 (20 µm), an array layer 2 (5 µm) and a flat layer 1 (5 µm) in sequence, wherein two resin layers 3 are arranged, the reinforcing layer 4 is located between the two resin layers 3, and the total thickness of the membrane is 55 µm.

### Example 10

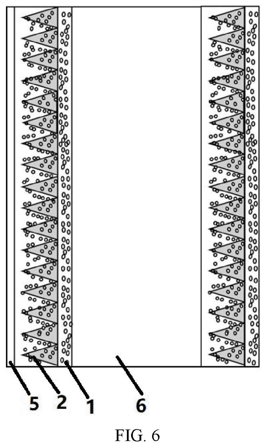

As shown in FIG. 6, preparation steps of a low-hydrogen-permeability proton exchange membrane in this are different from those in Example 1 in that step S3 is as follows:
the resin dispersion B continued to be sprayed onto the Pt-based additive layer to prepare a fluorinated proton exchange resin non-reinforced membrane 6 and finally a proton exchange membrane with an array structure on the bottom layer was formed; steps (1)-(2) were repeated to prepare the Pt-based additive layer, subsequently the resin dispersion B continued to be sprayed onto the Pt-based additive layer for membrane formation on the array, so as to form an array protective layer 5 with the thickness of 2 µm; the prepared membrane with the array structure and the array protective layer 5 and a proton exchange membrane with array structures on both sides was prepared from the prepared proton exchange membrane with the array structure on the bottom layer via hot pressing (160°C, 2.5 MPa, 5 min). As shown in FIG. 6, from top to bottom, the exchange membrane comprises an array protective layer 5 (2 µm), an array layer 2 (2 µm) and a flat layer 1 (3 µm), a non-reinforced membrane 6 (208 µm), and the array layer 2 (2 µm) and the flat layer 1 (3 µm) in sequence, wherein the total thickness of the membrane is 220 µm. Other preparation steps are the same as those in Example 1.

### Example 11

As shown in FIG. 2, the preparation of a proton exchange membrane in this example is different from that in Example 7 in that in the proton exchange membrane prepared in this example, the thickness of the array protective layer 5 is 10 µm, and the thickness of the resin layer 3 is 15 µm. Other conditions are the same as those in Example 7. As shown in FIG. 2, from top to bottom, the exchange membrane comprises an array protective layer 5 (10 µm), an array layer 2 (3 µm), a flat layer 1 (7 µm), a resin layer 3 (15 µm), a reinforcing layer 4 (5 µm) and the resin layer 3 (15 µm) in sequence, wherein two resin layers 3 are arranged, the reinforcing layer 4 is located between the two resin layers 3, and the total thickness of the membrane is 55 µm.

### Example 12

As shown in FIG. 6, the preparation of a proton exchange membrane in this example is different from that in Example 1 in that in this example, the thickness of the prepared proton exchange membrane is 120 µm, the thickness of the additive layer is 30 µm, the thickness of the reinforcing layer 4 is 30 µm, the thickness of the resin layer 3 is 30 µm, and the height of the single array is 17.0 times as the width of the single array. Other conditions are the same as those in Example 1. As shown in FIG. 1, from top to bottom, the exchange membrane comprises a resin layer 3 (30 µm), a reinforcing layer 4 (30 µm), the resin layer 3 (30 µm), an array layer 2 (12 µm) and a flat layer 1 (18 µm) in sequence, wherein two resin layers 3 are arranged, the reinforcing layer 4 is located between the two resin layers 3, and the total thickness of the membrane is 120 µm.

### Example 13

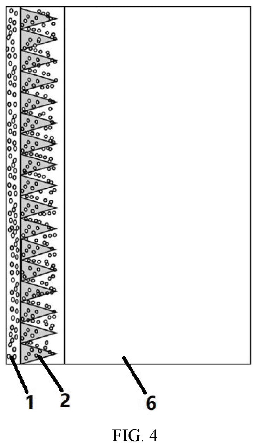

A low-hydrogen-permeability proton exchange membrane, as shown in FIG. 4, was prepared by the following steps:
S1, Pt/C nanoparticles were subjected to even ultrasonic dispersion (450 W, 2 h) in a mixed solvent of water and n-propanol (in a volume ratio of 1:1) to form dispersion A; a long-side chain perfluorosulfonic acid resin (PFSA) with an exchange capacity of 1.0 mmol/g and the number average molecular weight of 260,000 was added to the mixed solvent of water and n-propanol (in a volume ratio of 1:1) to be dissolved under the stirring (400 rpm, 48 h) to form a 30wt% resin dispersion B; the dispersion A and the dispersion B in a mass ratio of 3:5 were evenly stirred and mixed to obtain dispersion C, wherein the mass ratio of Pt to resin powder was 0.8 wt%;
S2, a template was subjected to gas phase modification using n-octyltrimethoxysilane via vacuum programmed temperature rise, the n-octyltrimethoxysilane and the silicon-based template were respectively placed in two watch glasses and then placed in a vacuum drying oven for programmed temperature rise at the temperatures of 65°C-85°C-150°C for 8 h, 3 h and 1 h respectively in a vacuum degree of -0.10 MPa, and then the template was taken out and ultrasonically washed once with trichloromethane, n-hexane and isopropanol in sequence for 10 min each; then the template was immersed in the dispersion C to be treated for 2 h at a vacuum negative pressure (-0.1 MPa) so that the dispersion C was evenly filled in the pore channels of the template to form orderly arranged arrays; then a certain amount of dispersion C was slowly dropwise added until a certain thickness was reached, and then a flat layer 1 was formed by drying and curing; and finally, after the membrane was directly peeled off from the template, the dispersion B was wrapped at the periphery of the arrays to form a Pt-based additive layer with a conical array structure, wherein the array density was 5.7×10⁸ units/cm², and the height of the single array was 2.6 times as the width of the single array; in addition, the total thickness of the Pt-based additive layer was 3 µm, wherein the thickness of the flat layer 1 was 1 µm, and the thickness of the array layer 2 was 2 µm; the thickness ratio of the flat layer 1 to the array layer 2 was 1:2; and the masses of the active components of the Pt-based additives in the flat layer 1 and the array layer 2 were 0.8 wt% of the mass of the resin powder, and the molar ratio of the active components of the Pt-based additives in the flat layer 1 and the array layer 2 was 1:1; and
S3, the resin dispersion B continued to be sprayed onto the Pt-based additive layer, and a single-reinforced fluorinated proton exchange membrane was prepared by using PTFE as a reinforcing layer 4. As shown in FIG. 1, from top to bottom, the exchange membrane comprises a resin layer 3 (6 µm), a reinforcing layer 4 (3 µm), the resin layer 3 (3 µm), an array layer 2 (2 µm) and a flat layer 1 (1 µm) in sequence, wherein two resin layers 3 are arranged, the reinforcing layer 4 is located between the two resin layers 3, and the total thickness of the membrane is 15 µm.

### Example 14

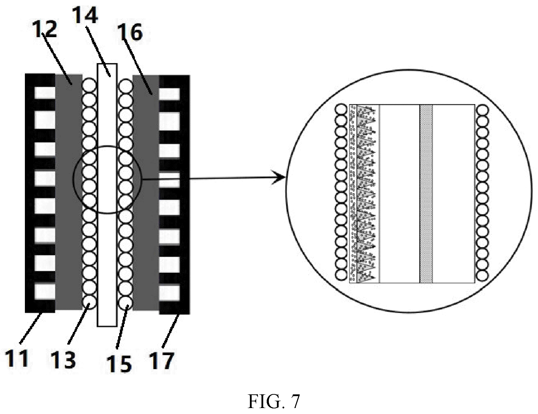

As shown in FIG. 7, a membrane electrode comprises the proton exchange membrane prepared in Example 1, which comprises, from left to right, an anode plate 11, an anode diffusion layer 12, an anode catalyst 13, a proton exchange membrane 14, a cathode catalyst 15, a cathode diffusion layer 16 and a cathode plate 17.

### Example 15

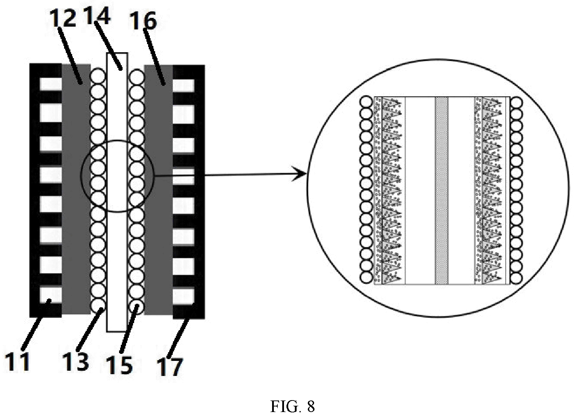

As shown in FIG. 8, a membrane electrode comprises the proton exchange membrane prepared in Example 8, which comprises, from left to right, an anode plate 11, an anode diffusion layer 12, an anode catalyst 13, a proton exchange membrane 14, a cathode catalyst 15, a cathode diffusion layer 16 and a cathode plate 17.

### Comparative example 1

A proton exchange membrane was prepared by the following steps:
A long-side chain perfluorosulfonic acid resin (PFSA) with an exchange capacity of 1.0 mmol/g and the number average molecular weight of 260,000 was added to a mixed solvent of water and n-propanol (in a volume ratio of 1:1) to be dissolved under the stirring (300 rpm, 24 h) to form a 30 wt% resin dispersion; a membrane was formed by blade coating, wherein PTFE was used as a reinforcing layer (5 µm), and the solvent was evaporated by heating to obtain a 55 µm single-reinforced proton exchange membrane.

### Comparative example 2

A proton exchange membrane was prepared by the following steps:
S1, Pt nanosphere particles were subjected to even ultrasonic dispersion (450 W, 2 h) in a mixed solvent of water and n-propanol (in a volume ratio of 1:1) to form dispersion A; a long-side chain perfluorosulfonic acid resin (PFSA) with an exchange capacity of 1.0 mmol/g and the number average molecular weight of 260,000 was added to the mixed solvent of water and n-propanol (in a volume ratio of 1:1) to be dissolved under the stirring (300 rpm, 24 h) to form a 30 wt% resin dispersion B; the dispersion A and the resin dispersion B in a mass ratio of 3:5 were evenly stirred and mixed to obtain dispersion C, and an additive membrane layer was prepared via blade coating, dried and shaped, wherein the mass ratio of Pt to resin powder was 0.8 wt%, and the thickness of the additive layer was 10 µm; and
S2, the resin dispersion B continued to be sprayed onto the Pt-based additive layer, and a single-reinforced fluorinated proton exchange membrane (comprising, from top to bottom, a resin layer (20 µm), a reinforcing layer (5 µm), the resin layer (20 µm) and a Pt-containing additive layer (10 µm), wherein two resin layers were arranged, the reinforcing layer was arranged between the two resin layers, and the total thickness of the membrane was 55 µm) was prepared by using PTFE as an reinforcing layer.

### Comparative example 3

A proton exchange membrane was prepared by the following steps:
S1, Co@Pt nanoalloy particles with Pt as a shell layer were subjected to even ultrasonic dispersion (450 W, 2 h) in a mixed solvent of water and n-propanol (in a volume ratio of 1:1) to form dispersion A; a long-side chain perfluorosulfonic acid resin (PFSA) with an exchange capacity of 1.0 mmol/g and the number average molecular weight of 260,000 was added to the mixed solvent of water and n-propanol (in a volume ratio of 1:1) to be dissolved under the stirring (300 rpm, 24 h) to form a 30 wt% resin dispersion B; the dispersion A and the resin dispersion B in a mass ratio of 3:5 were evenly stirred and mixed to obtain dispersion C, and an additive membrane layer was prepared via blade coating, dried and shaped, wherein the mass ratio of Pt to resin powder was 0.8 wt%, and the thickness of the additive layer was 10 µm; and
S2, the resin dispersion B continued to be sprayed onto the Pt-based additive layer, and a single-reinforced fluorinated proton exchange membrane (comprising, from top to bottom, a resin layer (20 µm), a reinforcing layer (5 µm), the resin layer (20 µm) and a Pt-containing additive layer (10 µm), wherein two resin layers were arranged, the reinforcing layer was arranged between the two resin layers, and the total thickness of the membrane was 55 µm) was prepared by using PTFE as an reinforcing layer.

### Comparative example 4

A proton exchange membrane was prepared by the following steps:
S1, Pt nanorod particles were subjected to even ultrasonic dispersion (450 W, 2 h) in a mixed solvent of water and n-propanol (in a volume ratio of 1:1) to form dispersion A; a long-side chain perfluorosulfonic acid resin (PFSA) with an exchange capacity of 1.2 mmol/g and the number average molecular weight of 240,000 was added to the mixed solvent of water and n-propanol (in a volume ratio of 1:1) to be dissolved under the stirring (300 rpm, 24 h) to form a 30 wt% resin dispersion B; the dispersion A and the resin dispersion B in a mass ratio of 3:5 were evenly stirred and mixed to obtain dispersion C, and an additive membrane layer was prepared via blade coating, dried and shaped, wherein the mass ratio of Pt to resin powder was 0.4 wt%, and the thickness of the additive layer was 5 µm; and
S2, the resin dispersion B continued to be sprayed onto the Pt-based additive layer, and a single-reinforced fluorinated proton exchange membrane (comprising, from top to bottom, a resin layer (17.5 µm), a reinforcing layer (10 µm), the resin layer (17.5 µm) and a Pt-containing additive layer (10 µm), wherein two resin layers were arranged, the reinforcing layer was arranged between the two resin layers, and the total thickness of the membrane was 55 µm) was prepared by using PTFE as an reinforcing layer.

### Comparative example 5

A proton exchange membrane was prepared by the following steps:
S1, Pt/C nanoparticles were subjected to even ultrasonic dispersion (180 W, 2 h) in a mixed solvent of water and n-propanol (in a volume ratio of 1:1) to form dispersion A; a long-side chain perfluorosulfonic acid resin (PFSA) with an exchange capacity of 1.1 mmol/g and the number average molecular weight of 250,000 was added to the mixed solvent of water and n-propanol (in a volume ratio of 1:1) to be dissolved under the stirring (300 rpm, 24 h) to form a 30 wt% resin dispersion B; the dispersion A and the resin dispersion B in a mass ratio of 3:5 were evenly stirred and mixed to obtain dispersion C, and an additive membrane layer was prepared via blade coating, dried and shaped, wherein the mass ratio of Pt to resin powder was 0.6 wt%, and the thickness of the additive layer was 10 µm; and
S2, the resin dispersion B continued to be sprayed onto the Pt-based additive layer, and a single-reinforced fluorinated proton exchange membrane (comprising, from top to bottom, a resin layer (20 µm), a reinforcing layer (5 µm), the resin layer (20 µm) and a Pt-based additive layer (10 µm), wherein two resin layers were arranged, the reinforcing layer was arranged between the two resin layers, and the total thickness of the membrane was 55 µm) was prepared by using PTFE as an reinforcing layer.

### Comparative example 6

Preparation steps of a low-hydrogen-permeability proton exchange membrane in this comparative example are different from those in Example 1 in that the step S3 is as follows:
The resin dispersion B continued to be sprayed onto the Pt-based additive layer, a fluorinated proton exchange resin non-reinforced membrane was prepared, and finally a proton exchange membrane with an array structure on the bottom layer was formed. As shown in FIG. 4, the exchange membrane, from top to bottom, comprises a non-reinforced membrane (50 µm), an array layer (2 µm) and a flat layer (3 µm), and the total thickness of the membrane is 55 µm. Other preparation steps are the same as those in Example 1.

### Comparative example 7

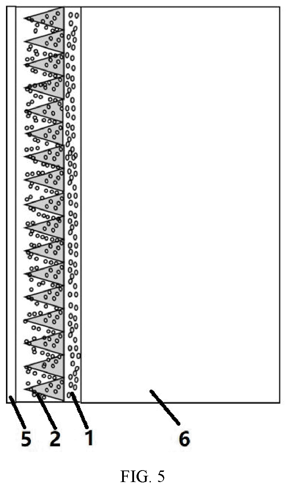

Preparation steps of a low-hydrogen-permeability proton exchange membrane in this comparative example are different from those in Example 1 in that the step S3 is as follows:
The resin dispersion B continued to be sprayed onto the Pt-based additive layer for membrane formation on the array so as to form an array protective layer 55 with the thickness of 2 µm; the resin dispersion B was subjected to blade coating to prepare a fluorinated proton exchange resin non-reinforced membrane with the thickness of 13 µm; and a proton exchange membrane with an array structure on the top layer was prepared from the prepared membrane with the array structure and the array protective layer 55 and the prepared fluorinated proton exchange resin non-reinforced membrane via hot pressing (160°C, 2.5 MPa, 5 min). As shown in FIG. 5, the exchange membrane, from top to bottom, comprises an array protective layer 55 (2 µm), an array layer (2 µm) and a flat layer (3 µm), and a non-reinforced membrane (13 µm) in sequence, and the total thickness of the membrane is 20 µm. Other preparation steps are the same as those in Example 1.

### Comparative example 8

A proton exchange membrane prepared in this comparative example is different from that in Example 1 in that in the proton exchange membrane prepared in this comparative example, the thickness of the flat layer is 30 times that of the array layer. Other conditions are the same as those in Example 1.

### Comparative example 9

A proton exchange membrane in this comparative example is different from that in Example 1 in that in the proton exchange membrane prepared in this comparative example, the active component of the flat layer is 50 times that of the array layer. Other conditions are the same as those in Example 1.

### Comparative example 10

A proton exchange membrane in this comparative example is different from that in Example 1 in that in the proton exchange membrane prepared in this comparative example, the array density is 2.0×10⁷ units/cm². Other conditions are the same as those in Example 1.

### Comparative example 11

A proton exchange membrane in this comparative example is different from that in Example 1 in that in the proton exchange membrane prepared in this comparative example, the height of the single array is 8.0 times as the width of the single array. Other conditions are the same as those in Example 1.

### Comparative example 12

A proton exchange membrane in this comparative example is different from that in Example 1 in that in the proton exchange membrane prepared in this comparative example, the mass of the active component of the Pt-based additive is 10.0wt% of that of the fluorinated proton exchange resin, and the array density is 1.0×10⁷ units/cm². Other conditions are the same as those in Example 1.

### Comparative example 13

A proton exchange membrane in this comparative example is different from that in Comparative example 6 in that in this comparative example, the thickness of the prepared proton exchange membrane is 5 µm, the thickness of the additive layer is 2 µm, the mass of the active component of the Pt-based additive is 10.0 wt% of that of the fluorinated proton exchange resin, the thickness ratio of the flat layer to the array layer is 1:1, and the array density is 1.0×10⁹ units/cm². Other conditions are the same as those in Comparative example 6.

### Comparative example 14

A proton exchange membrane in this comparative example is different from that in Example 1 in that in this comparative example, the thickness of the prepared proton exchange membrane is 5 µm, the thickness of the reinforcing layer is 1 µm, and the thickness of the additive layer is 2 µm, the mass of the active component of the Pt-based additive is 40.0 wt% of that of the fluorinated proton exchange resin. Other conditions are the same as those in Example 1.

### Comparative example 15

A proton exchange membrane in this comparative example is different from that in Example 1 in that in this comparative example, the thickness of the prepared proton exchange membrane is 220 µm, the thickness of the reinforcing layer is 15.7 µm with a total of 10 layers, the thickness of the additive layer is 30 µm, and the mass of the active component of the Pt-based additive is 0.01 wt% of that of the fluorinated proton exchange resin. Other conditions are the same as those in

### Comparative example 16

A proton exchange membrane in this comparative example is different from that in Comparative example 1 in that in this comparative example, the thickness of the prepared proton exchange membrane is 15 µm, the thickness of the reinforcing layer is 3 µm, and the thickness of the resin layer is 6 µm. Other conditions are the same as those in Comparative example 1.

### Performance test

The core membrane electrode assembly prepared by using the low-hydrogen-permeability proton exchange membrane provided in the present disclosure can be applied to fuel cells, electrolyzers and other electrochemical reaction devices. Examples are given below for hydrogen production via water electrolysis and power generation by fuel cells.

The proton exchange membrane prepared as described above was fabricated into a membrane electrode assembly for the performance test of hydrogen production via water electrolysis. The Ir loading of an anode catalytic layer was approximately 1.7 mg/cm², and the Pt loading of a cathode catalytic layer was approximately 0.5 mg/cm². To evaluate the performance, each of the aforementioned membrane electrode samples was assembled into an electrolyzer for hydrogen production via water electrolysis. The test conditions were as follows: 70°C, 3.0 A/cm² and atmospheric pressure (for 5 µm and 15 µm proton exchange membranes in examples and comparative examples); and 70°C, 3.0 A/cm² and a pressure difference of 5 bar (55 µm, 120 µm and 220 µm proton exchange membranes in examples and comparative examples).

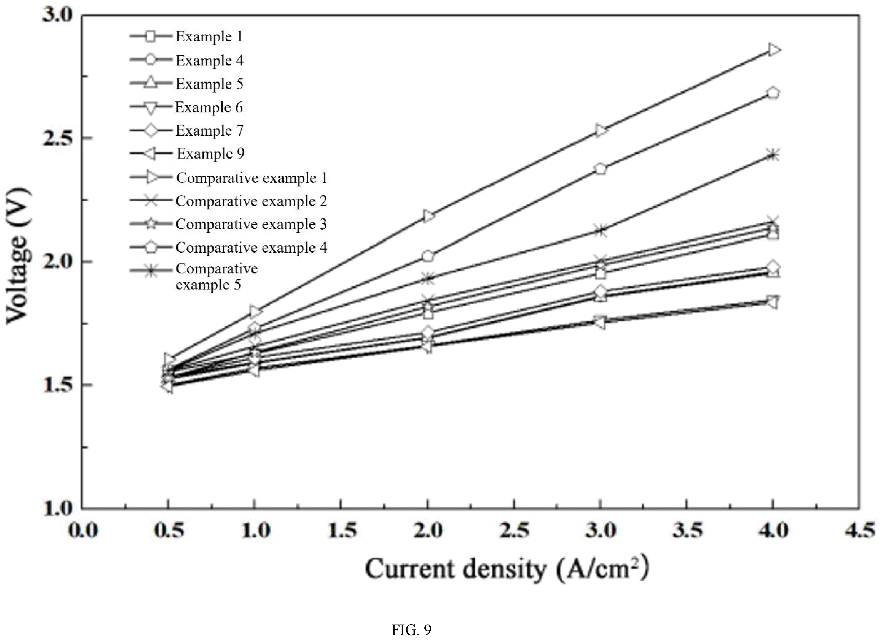

The results showed that at the same current density (3.0 A/cm²), compared with the proton exchange membranes provided in comparative examples, the hydrogen content in oxygen of the membrane prepared in this example was significantly reduced (all ≤ 0.10%) under the same membrane thickness, with specific data seen in Table 1; in addition, the electrochemical performance was significantly improved (with a voltage reduction of 0.03 V-0.8 V), with specific data seen in Table 2 and FIG. 9.

**Table 1 Various parameters and hydrogen contents in oxygen of proton exchange membranes in examples and comparative examples**

| **Sample number** | **Membrane thickness (µm )** | **IEC (mmol g)** | **Thickness (µm) of reinforced layer** | **Variety of additives** | **Contents (wt%) of additives** | **Active component ratio of array layer and flat layer** | **Thickness (µm) of additive layer** | **Thickness ratio of array layer to flat layer** | **Array density (units/ cm²)** | **Array aspect ratio** | **Thickness (µm ) of array protective layer** | **Hydrogen content (vol%) in oxygen** |
|---|---|---|---|---|---|---|---|---|---|---|---|---|
| Example 1 | 55 | 1.2 | 10 | Pt; rod | 0.4 | 1:1 | 5 | 2:3 | 2.3×10⁸ | 1.1 | - | 0.10 |
| Example 2 | 55 | 1.2 | 5 | Pt; rod | 0.4 | 1:1 | 10 | 3:7 | 2.3×10⁸ | 1.1 | - | 0.07 |
| Example 3 | 55 | 1.2 | 10 | Pt; sphere | 0.4 | 1:1 | 5 | 2:3 | 5.7×10⁸ | 5 | - | 0.08 |
| Example 4 | 55 | 1.0 | 5 | Pt; sphere | 0.8 | 1:1 | 10 | 3:7 | 5.7×10⁸ | 5 | - | 0.03 |
| Example 5 | 55 | 1.0 | 5 | Pt; sphere | 0.8 | 1:3 | 10 | 1:1 | 5.7×10⁸ | 2.6 | - | 0.028 |
| Example 6 | 55 | 1.0 | 5 | Pt; sphere | 0.8 | 1:1 | 10 | 1:1 | 5.7×10⁸ | 2.6 | - | 0.02 |
| Example 7 | 55 | 1.1 | 5 | Pt; C | 0.6 | 1:1 | 10 | 3:7 | 5.7×10⁸ | 4.2 | 3 | 0.04 |
| Example 8 | 55 | 1.2 | 5 | Pt; sphere | 0.4 | 1:1 | 5×2 | 2:3 | 5.7×10⁸ | 4.2 | 2 | 0.06 |
| Example 9 | 55 | 1.0 | 5 | Pt; Co | 0.8 | 1:1 | 10 | 1:1 | 5.7×10⁸ | 2.6 | - | 0.017 |
| Example 10 | 220 | 1.2 | - | Pt; rod | 0.4 | 1:1 | 5×2 | 2:3 | 2.3×10⁸ | 1.1 | 2 | 0.09 |
| Example 11 | 55 | 1.1 | 5 | Pt; C | 0.6 | 1:1 | 10 | 3:7 | 5.7×10⁸ | 4.2 | 10 | 0.05 |
| Example 12 | 120 | 1.2 | 30 | Pt; rod | 0.4 | 1:1 | 30 | 2:3 | 2.3×10⁸ | 17.0 | - | 0.05 |
| Example 13 | 15 | 1.0 | 3 | Pt; C | 0.8 | 1:1 | 3 | 2:1 | 5.7×10⁸ | 2.6 | - | 0.10 |
| Comparative example 1 | 55 | 1.0 | 5 | - | - | - | - | - | - | - | - | 0.50 |
| Comparative example 2 | 55 | 1.0 | 5 | Pt; sphere | 0.8 | - | 10 | - | - | - | - | 0.20 |
| Comparative example 3 | 55 | 1.0 | 5 | Pt; Co | 0.8 | - | 10 | - | - | - | - | 0.19 |
| Comparative example 4 | 55 | 1.2 | 10 | Pt; rod | 0.4 | - | 5 | - | - | - | - | 0.35 |
| Comp arative examp le 5 | 55 | 1.1 | 5 | Pt; C | 0.6 | - | 10 | - | - | - | - | 0.25 |
| Comp arative examp le 6 | 55 | 1.2 | - | Pt; rod | 0.4 | 1:1 | 5 | 2:3 | 2.3×10⁸ | 1.1 | - | 0.15 |
| Comp arative examp le 7 | 20 | 1.2 | - | Pt; rod | 0.4 | 1:1 | 5 | 2:3 | 2.3×10⁸ | 1.1 | 2 | 0.18 |
| Comp arative examp le 8 | 55 | 1.2 | 10 | Pt; rod | 0.4 | 1:1 | 5 | 1:30 | 2.3×10⁸ | 1.1 | - | 0.15 |
| Comp arative examp le 9 | 55 | 1.2 | 10 | Pt; rod | 0.4 | 1:50 AM | 5 | 2:3 | 2.3×10⁸ | 1.1 | - | 0.14 |
| Comp arative examp le 10 | 55 | 1.2 | 10 | Pt; rod | 0.4 | 1:1 | 5 | 2:3 | 2.0×10⁷ | 1.1 | - | 0.18 |
| Comp arative examp le 11 | 55 | 1.2 | 10 | Pt; rod | 0.4 | 1:1 | 5 | 2:3 | 2.3×10⁸ | 8.0 | - | 0.13 |
| Comp arative examp le 12 | 55 | 1.2 | 10 | Pt; rod | 10.0 | 1:1 | 5 | 2:3 | 1.0×10⁷ | 1.1 | - | 0.12 |
| Comp arative examp le 13 | 5 | 1.2 | - | Pt; rod | 10.0 | 1:1 | 2 | 1:1 | 1.0×10⁶ | 1.0 | - | 0.45 |
| Comp arative examp le 14 | 5 | 1.2 | 1 | Pt; rod | 40.0 | 1:1 | 2 | 2:3 | 2.3×10⁸ | 1.1 | - | 0.46 |
| Comp arative examp le 15 | 220 | 1.2 | 15.7× 10 | Pt; rod | 0.01 | 1:1 | 30 | 2:3 | 2.3×10⁸ | 1.1 | - | 0.16 |
| Comp arative examp le 16 | 15 | 1.0 | 3 | - | - | - | - | - | - | - | - | 0.80 |

Among all the examples, Examples 6 and 9 achieved a relatively superior hydrogen permeation inhibition effect, which is attributed to their optimal additive content, additive layer thickness, array density, array aspect ratio, active component ratio of the flat layer to the array layer, and the thickness ratio of the flat layer to the array layer. This demonstrates that the hydrogen permeation improvement effect can be further enhanced by the rational control of the active component ratio, thickness ratio and array parameters of the array layer and the flat layer. In addition, Example 9 exhibited a better hydrogen permeation inhibition effect compared with Example 6, which may stem from the fact that the Co@Pt nanoalloy particles with a Pt shell can effectively improve the utilization efficiency of the noble metal Pt. Meanwhile, owing to their unique surface electronic structure and the special interaction between the core and the shell, the Pt-based core-shell structured catalysts exhibit higher catalytic activity and stability.

**Table 2 Cell polarization curve data of proton exchange membranes in hydrogen production via water electrolysis in typical examples and comparative examples**

| Current density (A/cm²) | 0.5 | 1 | 2 | 3 | 4 |
|---|---|---|---|---|---|
| Example 1 | 1.555 V | 1.629 V | 1.795 V | 1.955 V | 2.113 V |
| Example 4 | 1.535 V | 1.593 V | 1.695 V | 1.862 V | 1.961 V |
| Example 5 | 1.526 V | 1.591 V | 1.693 V | 1.859 V | 1.956 V |
| Example 6 | 1.502 V | 1.570 V | 1.662 V | 1.765 V | 1.847 V |
| Example 7 | 1.535 V | 1.613 V | 1.715 V | 1.882 V | 1.981 V |
| Example 9 | 1.496 V | 1.561 V | 1.658 V | 1.755 V | 1.837 V |
| Comparative example 1 | 1.606 V | 1.799 V | 2.186 V | 2.533 V | 2.860 V |
| Comparative example 2 | 1.560V | 1.659V | 1.845V | 2.005V | 2.163V |
| Comparative example 3 | 1.531 V | 1.634V | 1.820V | 1.988V | 2.138V |
| Comparative example 4 | 1.565V | 1.731V | 2.024V | 2.377V | 2.685V |
| Comparative example 5 | 1.560V | 1.711V | 1.934V | 2.127V | 2.435V |

As shown in Table 2 and FIG. 9, among all the examples, Examples 6 and 9 achieved the best voltage performance, which is attributed to their optimal additive content, additive layer thickness, array density, array aspect ratio, active component ratio of the flat layer to the array layer, and thickness ratio of the flat layer to the array layer. This demonstrates that the electrical performance can be further enhanced by the rational control of the active component ratios, thickness ratios and array parameters of the array layer and the flat layer. In addition, Example 9 exhibited better voltage performance compared with Example 6, which may stem from the fact that the Co@Pt nanoalloy particles with Pt as a shell layer can effectively improve the utilization efficiency of noble metal Pt. Meanwhile, owing to their unique surface electronic structure and the special interaction between the core and the shell, Pt-based core-shell structured catalysts exhibited higher catalytic activity and stability. In contrast, among all the examples, Example 1 exhibited the poorest voltage performance due to its lowest additive content and array density, which is unfavorable for the effective utilization of the catalyst.

**Table 3 Cell polarization curve data of proton exchange membranes in fuel cell power generation in typical examples and comparative examples**

| Current density (A/cm²) | 0 | 0.25 | 0.5 | 1 | 1.5 | 2 |
|---|---|---|---|---|---|---|
| Example 13 | 0.982 V | 0.793 V | 0.687 V | 0.601 V | 0.563 V | 0.433 V |
| Comparative example 14 | 0.978 V | 0.798 V | 0.702 V | 0.652 V | 0.621 V | 0.533 V |
| Comparative example 16 | 0.951 V | 0.680 V | 0.549 V | 0.450 V | 0.399 V | 0.299 V |

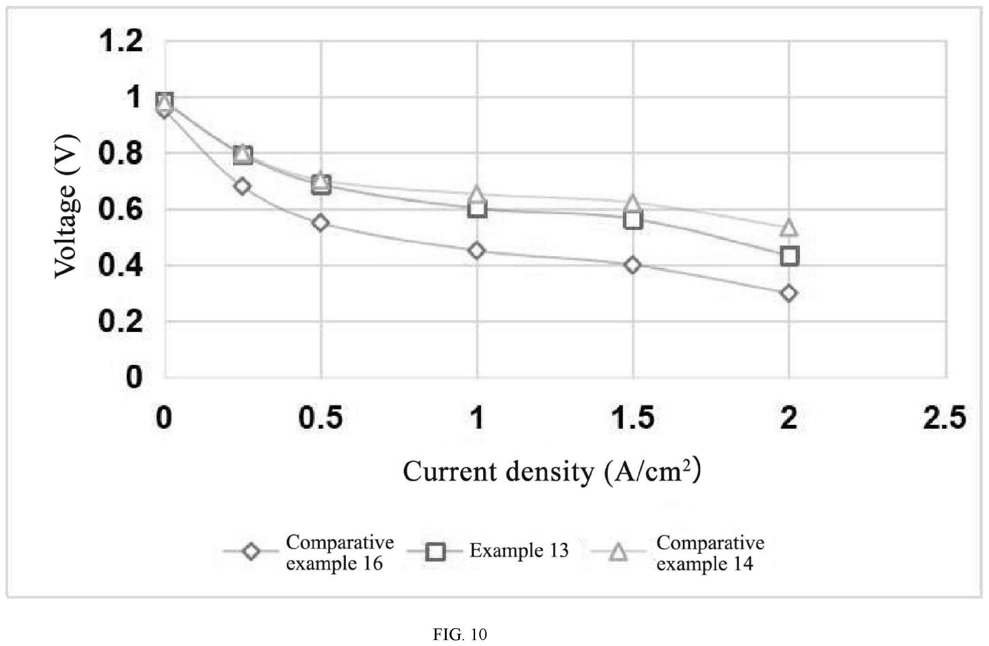

The proton exchange membranes prepared in Example 13, Comparative example 14 and Comparative example 16 were assembled into membrane electrodes for fuel cell performance test. The platinum loading of the catalyst layer is 0.5 mg/cm², with the test conditions being 75°C, 40% RH and a hydrogen-air atmosphere. As shown in Table 3 and FIG. 10, compared with Comparative example 16, Example 13 and Comparative example 14 have better voltage performance, owing to their Pt-based additives that reduce hydrogen permeation. This demonstrates that this type of proton exchange membrane can effectively enhance the performance of fuel cells.

The embodiments described above set forth the technical solutions and beneficial effects of the present disclosure in detail. It should be understood that the forgoing descriptions are merely specific embodiments of the present disclosure and shall not be construed as limiting the present disclosure. Any modifications, additions and equivalent substitutions made within the scope of the principles of the present disclosure shall all be included in the protection scope of the present disclosure.

## Claims

1. A low-hydrogen-permeability proton exchange membrane, comprising a Pt-based additive layer and a substrate membrane, wherein the Pt-based additive layer is located at one side or two sides of the substrate membrane; the total thickness of the low-hydrogen-permeability proton exchange membrane is 5 µm-220 µm;
the Pt-based additive layer consists of a Pt-based additive and a fluorinated proton exchange resin, and the Pt-based additive is selected from Pt nanoparticles, Pt/C nanoparticles or Co@Pt nanoalloy particles; the mass of the active component in the Pt-based additive is 0.4 wt%-1.0 wt% of that of the fluorinated proton exchange resin;
the Pt-based additive layer comprises an array layer and a flat layer, the thickness ratio of the array layer to the flat layer is 1:(1-3), and the molar ratio of the active components in the array layer and the flat layer is 1:(1-3); the thickness of the array layer is 0.1 µm-15 µm, the array layer is composed of orderly arranged arrays and an array layer resin wrapping the arrays, the array density is 1.0×10⁷ units/cm²-1.0×10⁹ units/cm², and the height of a single array is 1.0-17.0 times as the width of the single array; and
the substrate membrane is a fluorinated proton exchange membrane.

2. The low-hydrogen-permeability proton exchange membrane according to claim 1, wherein each array in the array layer is cylindrical, prismatic or conical in shape, the array density is 1.0×10⁸ units/cm²-8.0×10⁸ units/cm², and the height of the single array is 1.0-5.0 times as the width of the single array.

3. The low-hydrogen-permeability proton exchange membrane according to claim 1, wherein one side of the array layer away from the substrate membrane is further provided with an array protective layer; the array protective layer is made of the fluorinated proton exchange resin, and the thickness of the array protective layer is 1 µm-10 µm.

4. The low-hydrogen-permeability proton exchange membrane according to claim 1, wherein the total thickness of the Pt-based additive layer is 2 µm-30 µm.

5. The low-hydrogen-permeability proton exchange membrane according to claim 1, wherein the fluorinated proton exchange membrane is a fluorinated proton exchange resin reinforced membrane or a fluorinated proton exchange resin non-reinforced membrane;
the fluorinated proton exchange resin reinforced membrane comprises resin layers and reinforcing layers, the number of the reinforcing layers is 1-10, the number of the resin layers is one greater than that of the reinforcing layers, and the reinforcing layers are located between two adjacent resin layers; the total thickness of the fluorinated proton exchange resin reinforced membrane is 3 µm-218 µm, and the thickness of the single resin layer is 1 µm-30 µm; the thickness of the single reinforcing layer is 1 µm-30 µm; and
the fluorinated proton exchange resin non-reinforced membrane is only composed of the resin layers and has a thickness of 3 µm-218 µm.

6. A preparation method of a low-hydrogen-permeability proton exchange membrane according to any one of claims 1-5, comprising the following steps:
S1, ultrasonically dispersing a Pt-based additive in a solvent to obtain dispersion A, dispersing a fluorinated proton exchange resin in the solvent to obtain dispersion B, and evenly mixing the dispersion A with the dispersion B under the stirring to obtain dispersion C;
S2, filling the dispersion C into array pore channels of a silicon-based template subjected to surface modification, then performing negative pressure treatment, subsequently continuing to add dropwise the dispersion C to reach the preset thickness of a flat layer, followed by drying and curing, peeling off the silicon-based template to obtain an integrally formed flat layer and orderly arranged array, and then wrapping the dispersion B at the periphery of the arrays, thus obtaining a Pt-based additive layer; and
S3, preparing a substrate membrane on the Pt-based additive layer prepared in step S2 to obtain the low-hydrogen-permeability proton exchange membrane.

7. The preparation method according to claim 6, wherein in step S1, the solvent is selected from at least one of water, ethanol, n-propanol, isopropanol, N,N-dimethylformamide, N,N-dimethylacetamide or N-methylpyrrolidone; and the power of ultrasonic dispersion is 180 W-630 W, the duration of ultrasonic dispersion is 0.5 h-6 h, the rotation speed of stirring is 200 rpm-800 rpm, and the duration of stirring is 24 h-72 h; and
in step S1, a mass ratio of the dispersion A to the dispersion B in the dispersion C is (0.2-1):1.

8. The preparation method according to claim 6, wherein in step S2, the silicon-based template is subjected to gas-phase surface modification via vacuum programmed temperature rise, a surface modification agent is selected from octadecyltrichlorosilane, octyltrimethoxysilane, (3-aminopropyl)trimethoxysilane, (3-mercaptopropyl)trimethoxysilane or octadecyltrimethoxysilane and octyltrimethoxysilane; the surface modification temperature is programmed to rise in stages of (50-70 preparation method acc; and the vacuum degree for surface modification is -0.20 MPa to -0.10 MPa; and
in step S2, the vacuum degree during the negative pressure treatment is -0.20 MPa to -0.10 MPa.

9. The preparation method according to claim 6, wherein in step S3, a process for preparing the substrate membrane is as follows: the fluorinated proton exchange resin non-reinforced membrane is prepared by using the dispersion B, or, the process for preparing the substrate membrane is as follows: the fluorinated proton exchange resin reinforced membrane is prepared by using the dispersion B and a reinforcing material;
the reinforcing material is selected from one or more of polytetrafluoroethylene, polyvinylidene fluoride, polyethylene, polypropylene, polyvinyl chloride, ethylene-tetrafluoroethylene copolymers, polyphenylene sulfide non-woven fabric, polyether ether ketone, polyimide, fluorinated polyimide, polysulfone, perfluoroethylene-propylene fibers or perfluoroalkoxy vinyl ether copolymer fibers; and
the step S3 further comprises: after the preparation of the substrate membrane is completed, preparing an array protective layer at one side of the array layer away from the substrate membrane by using the dispersion B if the array layer is away from the substrate membrane.

10. Use of the low-hydrogen-permeability proton exchange membrane according to any one of claims 1-5 or the low-hydrogen-permeability proton exchange membrane prepared by using the preparation method according to any one of claims 6-9 in water electrolysis or fuel cell membrane electrodes.
